# EUROPEAN PATENT APPLICATION

(11) **EP 4 749 247 A1**
(43) Date of publication of application: **27.05.2026**
(21) Application number: 25212465.6
(22) Date of filing: 30.10.2025
(51) Int. Cl.: G01F 1/667, G01F 15/02, G01N 29/024

(54) **METER WITH MIXTURE DETECTION AND METROLOGY COMPENSATION**

(30) Priority: 20.11.2024 US 202418953522
(71) Applicant: ITRON, INC., Liberty Lake, WA 99019 (US)
(72) Inventor: JANDAUD, Pierre-Olivier, Liberty Lake, 99019 (US); MEURISSE, Thibaut, Liberty Lake, 99019 (US); BAILLY, Ludovic, Liberty Lake, 99019 (US)
(74) Representative: Morrall, Jonathan Ian McLachlan

(57) **Abstract**

The disclosure describes techniques for a fluid meter or other device to compensate for errors in ultrasonic flowrate measurement. In an example, a fluid meter measures a fluid (typically water) having an additive or impurity, such as glycol, or salt, respectively. When metering such a fluid, ultrasonic fluid metering devices may produce slightly inaccurate results. Accordingly, an adjustment factor, based on the fluid, the additive or impurity, and the temperature, would be desirable. In an example, the fluid (e.g., water and an additive or an impurity) and the temperature of the fluid are determined. The speed of sound through the fluid is measured, and mapped to a concentration (e.g., a percentage of the additive or impurity). The concentration is mapped to a viscosity, and the viscosity is mapped to the adjustment factor. The adjustment factor is used to adjust (or correct) a flowrate measured by an ultrasonic metrology device.

## Description

### BACKGROUND

Water and other fluid meters are typically calibrated for pure fluid, such as water. In many applications, additional chemicals can be present, which can significantly impact the accuracy of the meter.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. Moreover, the figures are intended to illustrate general concepts, and not to indicate required and/or necessary elements.
FIG. 1 is a block diagram showing an example fluid supply system configured for measuring flowrates of a fluid containing an additive or an impurity.
FIG. 2 is a block diagram showing example detail of a system for detection of fluid characteristics and metrology compensation.
FIG. 3 is a block diagram showing example techniques for determining a percentage concentration of an additive or an impurity (e.g., glycol or salt, respectively) in a fluid (e.g., water) by using the speed of sound in the fluid as an input.
FIG. 4 is a block diagram showing example techniques for determining a viscosity of a fluid (e.g., water) mixed with an additive or an impurity (e.g., glycol or salt, respectively) based on a concentration of the impurity.
FIG. 5 is a block diagram showing example techniques for determining a flowrate adjustment factor based on an input indicating the viscosity of the fluid, wherein the flowrate adjustment factor can be used to adjust a flowrate determined by an ultrasonic fluid meter to generate an adjusted flowrate that more nearly expresses an actual flowrate.
FIG. 6 is a cross-sectional diagram of an ultrasonic fluid meter configured for operation with the system for measuring flowrates of a fluid containing an additive or an impurity.
FIG. 7 is a flow diagram showing an example method by which a system measures flowrates of a fluid containing an additive or an impurity.

### DETAILED DESCRIPTION

### Overview

The disclosure describes techniques for providing a fluid meter that measures flowrates of a fluid containing an additive or an impurity. In an example, a fluid meter (e.g., a meter having an ultrasonic fluid meter and/or metrology device) measures a fluid that is a mixture, such as water and glycol, or water and salt, etc. The fluid (e.g., a mixture of water and an additive or an impurity) may be metered, so that appropriate billing can be submitted. In an application wherein the fluid is being used to transfer heat, glycol may be mixed with water to lessen the chance of freezing or boiling. In an application wherein desalinated water is being provided, some salt may remain, and appropriate billing may depend on the salinity. In both cases, ultrasonic fluid metering devices may produce slightly inaccurate results. Accordingly, a flowrate adjustment factor, based on the fluid (e.g., the mixture) and temperature would be desirable.

In an example of ultrasonic fluid metering, two ultrasonic transducers are positioned within a water meter (or alternatively referred to as a water metering device), with one transducer located a fixed distance "upstream" from a "downstream" transducer. An ultrasonic signal (sound) is sent upstream, from the downstream transducer to the upstream transducer. Similarly, an ultrasonic signal is sent downstream, from the upstream transducer to the downstream transducer. The signal going downstream has a slightly shorter time-of-flight (assuming the fluid is flowing downstream). The flowrate can be calculated using this time difference and known separation of the transducers. The flowrate may change over time, and flowrate data over time can be used to calculate an overall quantity of fluid that has passed through the meter and appropriate billing. The existence of an additive such as glycol or an impurity such as salt can result in an inaccurate flowrate calculation, and thus an inaccurate measurement of the quantity of the fluid that has passed through the meter.

An example helps to illustrate the techniques disclosed herein. The type of "additive" or "impurity," (e.g., glycol or salt, respectively), is provided as an input to the metering device and/or the metering device is constructed based on use with a particular impurity. In some examples, the type of impurity may be determined by the metering device, or determined by another device and provided as an input to the metering device. In other examples, the metering device is designed and constructed to be used with a particular additive or impurity. The temperature of the fluid is measured, such as by a sensor in the metering device. The speed of sound within the fluid is measured by the metering device. The speed of sound may be mapped to a concentration percentage of the impurity, such as by a function or lookup table. The concentration percentage may be mapped to a viscosity of the fluid. The viscosity of the fluid may be mapped to a flowrate adjustment factor. The flowrate of the fluid may be measured by an ultrasonic metering device, and the output of the measurement may be adjusted by the flowrate adjustment factor to achieve a more accurate flowrate. The adjusted flowrate may be used over time to calculate a quantity of fluid flowing through the meter in a time period, e.g., a billing cycle.

### Example System and Techniques

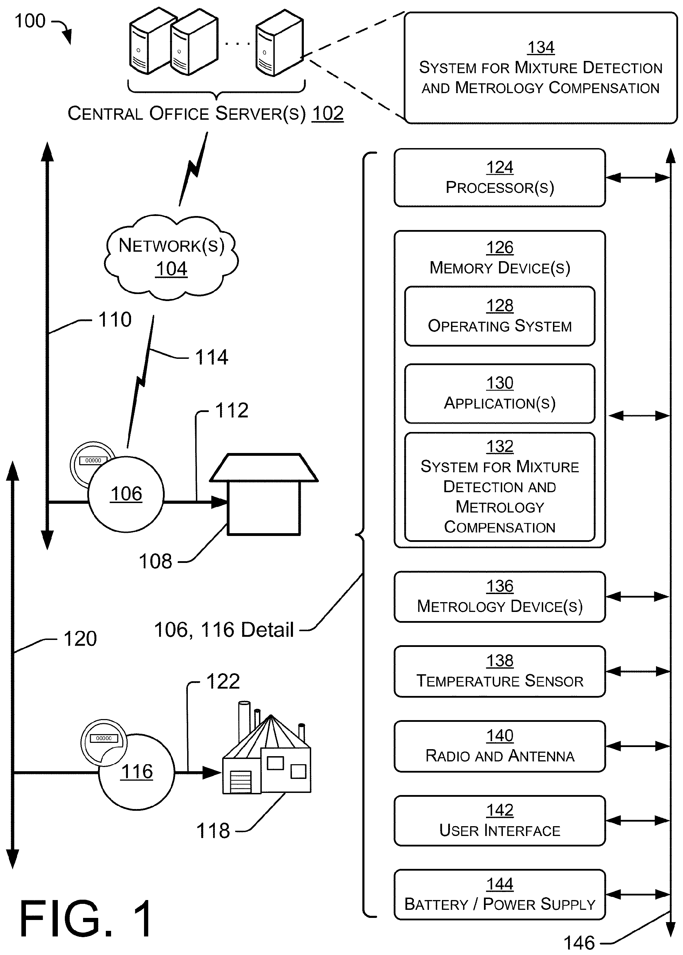

FIG. 1 shows aspects of an example fluid delivery system 100, and shows an example implementation of a system, method, and associated devices and techniques to detect characteristics of a fluid (e.g., a mixture of water or other fluid, and an additive or an impurity) and to compensate for errors in ultrasonically-derived flowrate metering measurements. In the example shown, central office server(s) 102 communicate through the network(s) 104 with a plurality of fluid metering devices 106, 116.

The fluid metering device 106 (e.g., a "smart water meter" or other smart metering device) serves a residential customer site 108, and is representative of many such meters and sites, which may number in the thousands, hundreds of thousands, or more. A water main 110 and service connection 112 provide water to the residential customer site 108. In an example, the water main 110 may include desalinated water. Such water may have an unknown and/or variable salinity. The fluid metering device 106 may communicate by radio frequency (RF) 114 with the network(s) 104, or by wired link, or other means.

The fluid metering device 116 measures consumption of a business, commercial or industrial customer 118. The commercial or industrial customer 118 may be supplied water by water main 120, or heated fluid (e.g., water and glycol) or other commodity by supply pipe and associated spur or service connection 122. The fluid metering device 116 may communicate with the server(s) 102 or the servers of a different company (not shown) by means of RF signals (not shown) or other means.

Example detail of the fluid metering devices 106, 116 is shown. One or more processor(s) 124 is in communication with memory device(s) 126. In an example, the memory device(s) 126 contain software, such as an operating system 128, application(s) 130, and a system 132 for mixture detection and metrology compensation. In an alternative embodiment some or all of the system 132 may be contained in a system 134 for mixture detection and metrology compensation, which may be executed by the server(s) 102 or other computing device.

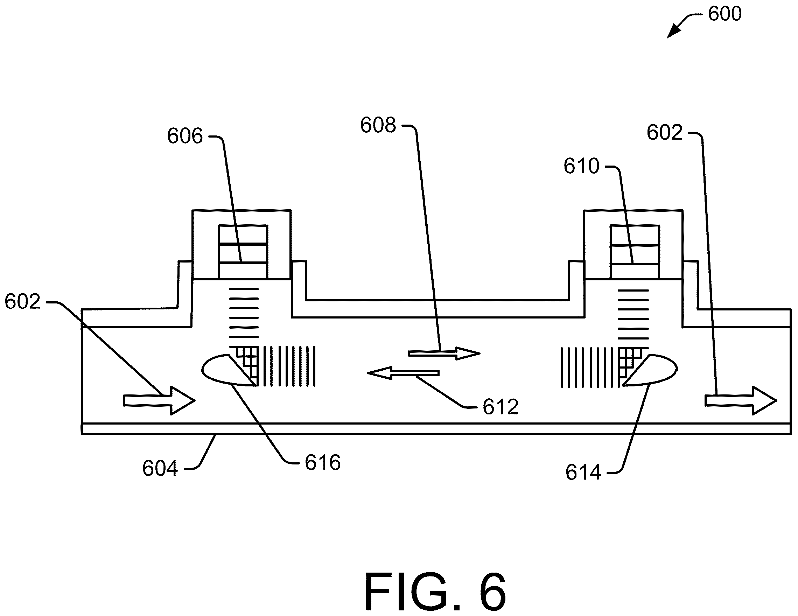

Metrology device(s) 136 may include an ultrasonic fluid meter 600 (seen in FIG. 6) and/or other devices as needed to measure, calculate, record, etc., flowrate and consumption information. A temperature sensor 138 is configured to obtain temperature measurements of the fluid (e.g., a mixture of water or other fluid, and an additive or an impurity) being metered. A radio 140 (e.g., a receiver and transmitter) and an antenna may be used to report flowrate and/or consumption information, to download software, upload data, etc. A user interface 142 may include a screen, dial, gauge, etc. A battery and/or power supply 144 is configured to supply power to the one or more processor(s) 124, memory device(s) 126, metrology device(s) 136, temperature sensor 138, radio 140, and user interface 142. A bus and/or wiring harness 146 is configured to provide power and data connectivity to the devices of the fluid metering device 106.

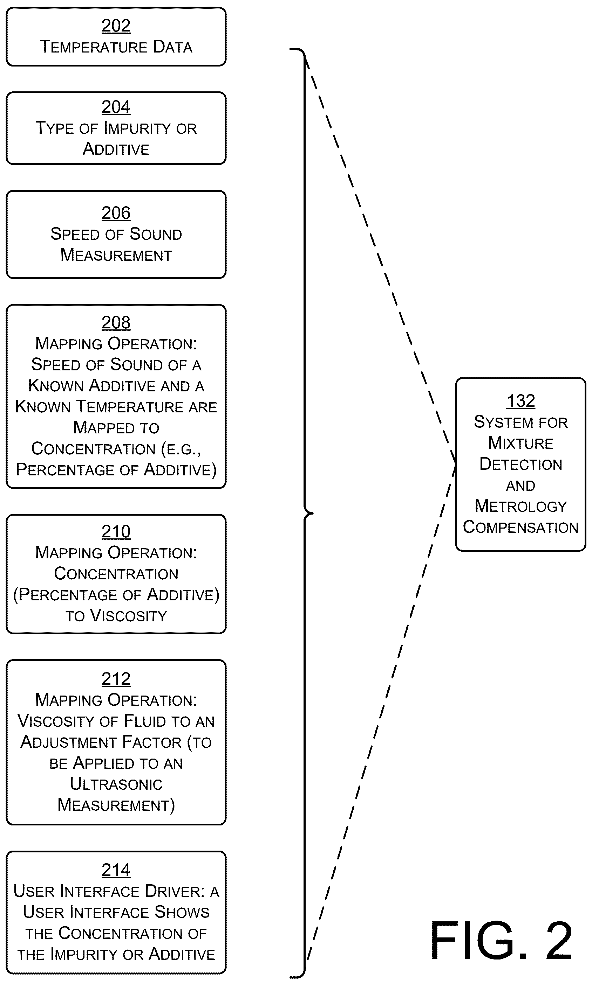

FIG. 2 shows example detail of a system 132 for metrology compensation when measuring a flowrate of a fluid (e.g., a mixture of water or other fluid, and an additive or an impurity). In the example, temperature data 202 of the fluid is obtained from a temperature sensor 138 (seen in FIG. 1) and stored for use in the mapping operation 208.

At block 204, an identity of the type of "impurity" or "additive" (for which the system 132 is configured to provide an adjustment for the ultrasonic metrology) is obtained. In an example, the additive is glycol, which is added to reduce the risk of boiling and freezing of the fluid, by increasing the boiling point and lowering the freezing point, respectively. In another example, the impurity is salt, which a desalination process failed to remove.

At block 206, a speed of sound of the fluid (e.g., a mixture of water or other fluid, and an additive or an impurity) is measured, such as by operation of the metrology device(s). In an example, the speeds (of upstream and downstream ultrasonic signals) are averaged to determine the speed of sound. The speed of each signal (upstream and downstream) is determined based on each signal's respective time-of-flight, and the distance between the upstream and downstream transducers.

At a mapping operation 208, the speed of sound measurement (e.g., from block 206) and the temperature data 202 are used as input, and the concentration of the impurity (e.g., whose identity is known from block 204) is determined. In an example, the association between speed of sound, temperature, and concentration (of additive or impurity) may be determined by measurement and use of known mixtures, to build lookup tables. Each lookup table would be associated with a temperature range, and enable measurement of the speed of sound to determine the percentage concentration. The concentration may be expressed as a percentage, ratio, etc. Accordingly, a different speed-of-sound to concentration-of-impurity function (or lookup table, etc.) is used for different ranges of temperature. Accordingly, the concentration of the mixture (typically water and a known "additive" or known "impurity") is calculated.

At block 210, in a mapping operation, the concentration of the impurity is mapped to derive the viscosity of the fluid. Accordingly, the viscosity is calculated at block 210. In an example, the viscosity of known concentrations is measured to build a lookup table associated with a temperature or temperature range. In the example, the association between the concentration of the fluid mixture (i.e., of the impurity or additive) and the viscosity may be determined by measurement and use of known mixtures, to build lookup tables. For each concentration, a plurality of lookup tables would be created, and associated with a respective plurality of temperatures (or temperature ranges). Accordingly, by using a measured temperature, the concentration (e.g., percentage) can be used (e.g., mapped by the lookup table) to determine viscosity.

At block 212, in a mapping operation, the viscosity of the fluid (e.g., a mixture of water or other fluid, and an additive or an impurity) is mapped to derive a flowrate adjustment factor by which an ultrasonic flowrate measurement may be adjusted to achieve better accuracy. In an example, different viscosities are mapped to different flowrate adjustment factors, such as by a function or lookup table. Accordingly, if a fluid mixture is flowing through a metering device, and an ultrasonic metrology device is measuring the flowrate of the fluid (e.g., a mixture of water or other fluid and an additive or an impurity), that flowrate may be "adjusted" using the flowrate adjustment factor to reflect the actual flowrate more accurately. The "flowrate adjustment factor" can be a multiplicative factor, but can adjust the measured flowrate in ways other than multiplication. A multiplicative flowrate adjustment factor may increase and/or decrease the measured flowrate by a percentage, such as 0.5%, etc. In an example, the mapping operation 212 may include lookup tables, functions, and/or other tools that can be built by experimentation and measurement. In a particular example, each viscosity or range of viscosities may be associated with a multiplicative factor, which when multiplied with an ultrasonically measured flowrate creates a more accurate "adjusted flowrate."

At block 214, a user interface driver updates a user interface (e.g., user interface 142) to show the concentration of the impurity or additive. In an example, if the fluid is water having an impurity of salt (e.g., a desalination process has not fully removed the salt) then the concentration of salt in the water could be displayed by the user interface.

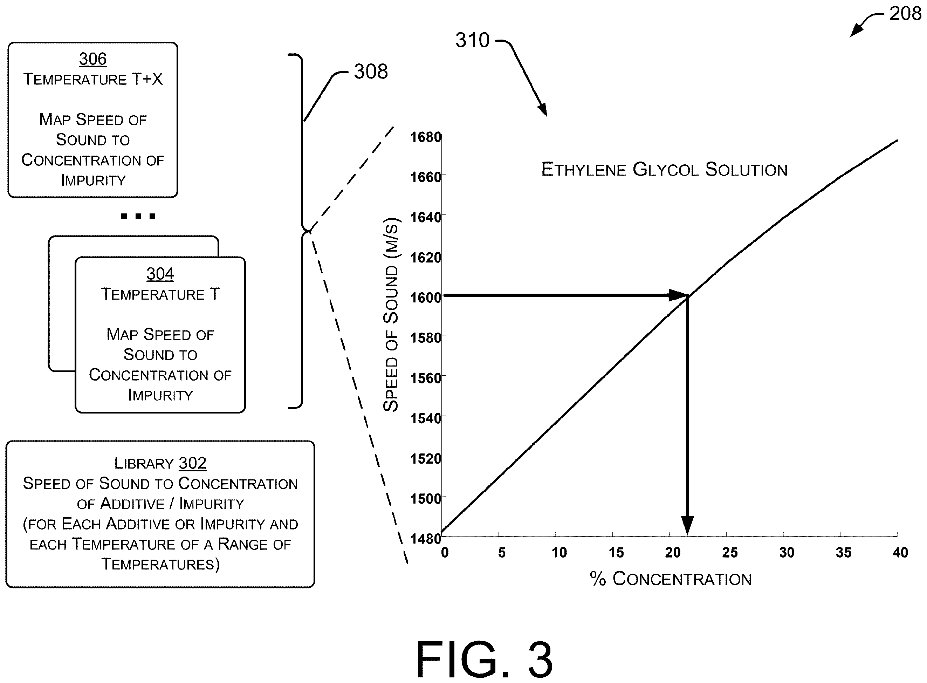

FIG. 3 shows example techniques for determining a percentage concentration of an additive or an impurity (e.g., glycol or salt, respectively) in a fluid (e.g., water) by using as inputs: (1) the speed of sound in the fluid; (2) the identity of the additive or impurity; and (3) the temperature. Accordingly, the techniques of FIG. 3 show example structure and operation of the mapping operation 208 and/or function of FIG. 2.

In the example, a library 302 comprises a plurality of mappings for "speed of sound to concentration of impurity (or additive)." The mappings are for a plurality of temperatures and/or temperature ranges. The mappings may include functions, applications, computer programs, and/or lookup tables. Each mapping is designed for operation with a particular additive/impurity at a temperature and/or temperature range. Thus, a library 302 associated with three different additives/impurities and ten temperature ranges for each additive/impurity, would include 30 mapping functions and/or lookup tables. In the example of FIG. 3, while lookup tables 304 and 306 are shown, a plurality of lookup tables may be provided. Each lookup table maps a speed of sound to a concentration of the additive or impurity based on a respective plurality of temperatures or temperature ranges. Accordingly, each lookup table in the plurality is based on the same additive or impurity; however, each of the plurality of tables is based on a different respective temperature or temperature range.

For simplicity, the library 302 of FIG. 3 shows a single additive (glycol) and "X" different temperature ranges. Such a library would be useful where the additive was known to be glycol, and the temperature was expected to vary between the temperature T and the temperature T+X. Thus, if the temperature was measured to be "T" then the mapping function or lookup table 304 would be used. If the temperature was measured to be "T+X" then the mapping function or lookup table 306 would be used. If the temperature was measured to be between T and T+X, then a mapping function between mapping function or lookup table 304 and mapping function or lookup table 306 would be used.

A graphical representation 310 of a mapping function is shown. The graphical representation 310 may be associated with the mapping function or lookup table 304 at temperature T, the mapping 306 at temperature T+X, or a mapping function (not labeled) for a temperature between temperature T and temperature T+X. The graphical representation 310 shows how a speed of sound of 1600 m/s "maps" to a concentration of 22% glycol. It should be noted that the mapping shown by the graphical representation 310 is based on a temperature or temperature range, and a particular additive and/or impurity.

While library 302 shows an example wherein a single additive is expected, in a more generalized case, a library may include a plurality of mappings (based on a respective plurality of temperatures) for each of a plurality of additives and/or impurities. The plurality of mappings for each included additive may include a mapping associated with each of a plurality of temperature ranges.

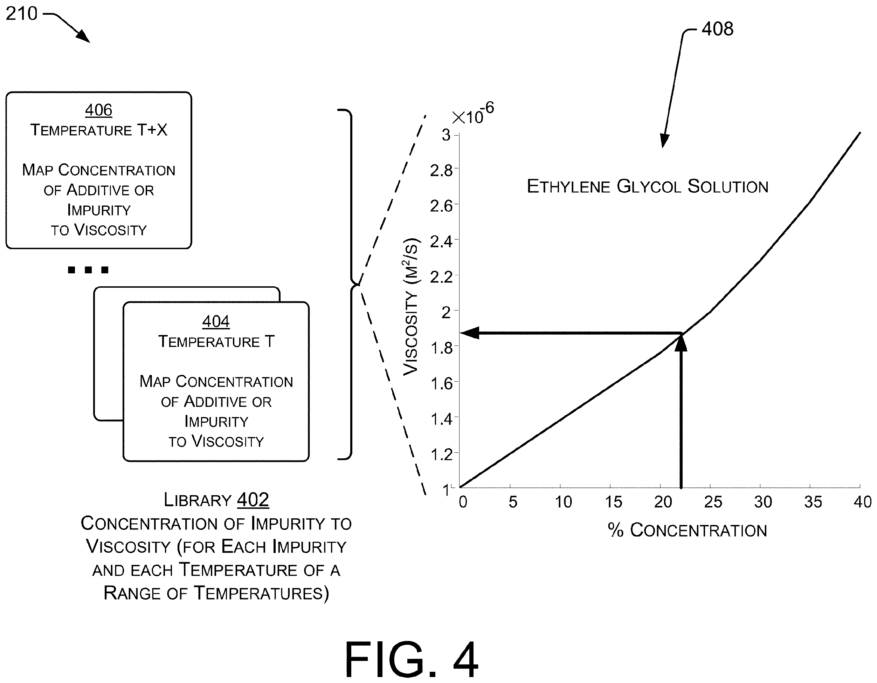

FIG. 4 shows example techniques for determining a viscosity of a fluid (e.g., water) mixed with an additive or an impurity (e.g., glycol or salt, respectively) based on a concentration of the impurity and the temperature of the mixture. Accordingly, the techniques of FIG. 4 show example structure and operation of the mapping operation and/or function of block 210 of FIG. 2.

In the example of FIG. 4, the library 402 includes map(s), function(s), and/or lookup table(s) 404 through 406, associated with each of a plurality of temperatures, for each of one or more additive (e.g., glycol) and/or impurity (e.g., salt). In an example, the library 402 may be associated with only one additive (glycol), and may provide maps, functions, and/or lookup tables for each of a plurality of temperatures or temperature ranges. Accordingly, map(s), function(s), and/or lookup table(s) 404 map concentrations of additive or impurity to respective viscosities at temperature T, while map(s), function(s), and/or lookup table(s) 406 maps concentrations of additive or impurity to respective viscosities at temperature T+X. A graphical representation 408 shows the 22% concentration of glycol from FIG. 3 being mapped to a viscosity of 1.9 x 10⁻⁶ meters squared per second, using one of map(s), function(s), and/or lookup table(s) 404 through map(s), function(s), and/or lookup table(s) 406 (from among a plurality of such lookup tables, each based on a temperature and/or temperature range), based on the temperature.

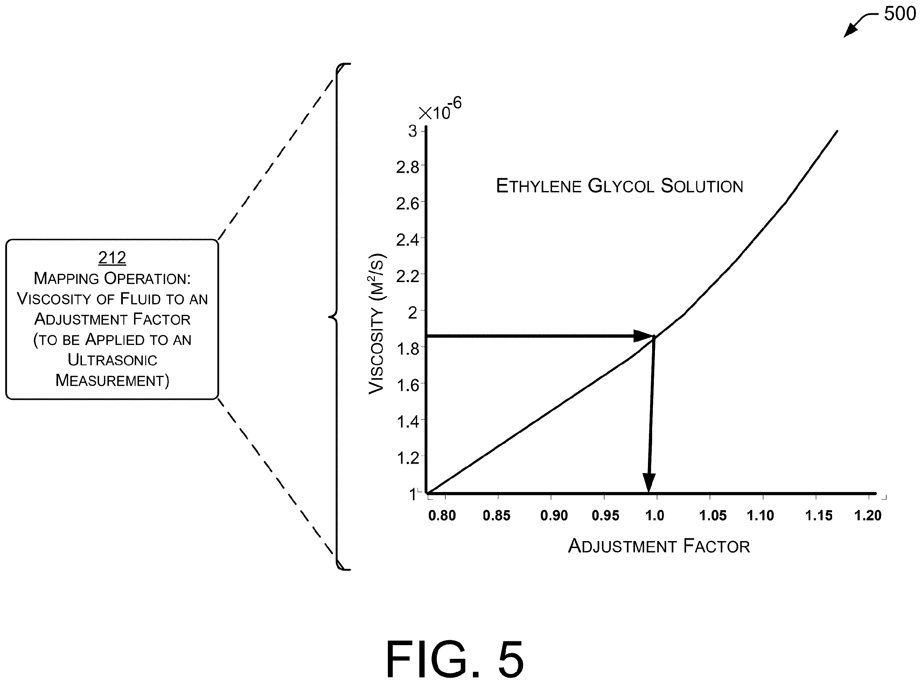

FIG. 5 shows example techniques for determining a flowrate adjustment factor based on input of the viscosity of the fluid. Accordingly, the techniques of FIG. 5 show example structure and operation of the mapping operation and/or function of block 212 of FIG. 2. In operation, the flowrate adjustment factor can be used to adjust a measured flowrate as determined by an ultrasonic fluid meter, and to thereby express the flowrate more accurately as an adjusted flowrate. The flowrate adjustment factor may be a multiplicative factor or other operator or function that adjusts (i.e., changes) a calculated ultrasonic flowrate (i.e., an ultrasonic flowrate based on measured ultrasonic times-of-travel). As seen in the graphical representation 500, the viscosity of 1.9 (obtained from FIG. 4) maps or translates to a flowrate adjustment factor of 0.98. Note that there are no units for the adjustment factor. The adjustment factor is a multiplicative factor applied to the flowrate, to adjust the flowrate value. Values of the adjustment factor will depend on the flowrate and the meter itself. In an example, the error of an uncorrected measurement may vary from approximately +10% to -2% (depending on the flowrate). In that example, the correction or adjustment factor will vary from 0.9 to 1.02. For other meters, the amplitude of the values can be larger or smaller.

FIG. 6 is a cross-sectional diagram of an ultrasonic fluid meter 600 configured for operation with the system for mixture detection and metrology compensation. Fluid 602 flows through a pipe 604. An upstream ultrasonic transducer 606 sends a downstream-bound signal 608 downstream to a downstream ultrasonic transducer 610. The downstream time-of-flight of the downstream-bound signal 608 is measured. The downstream ultrasonic transducer 610 sends an upstream-bound signal 612 upstream to the upstream ultrasonic transducer 606. The upstream time-of-flight of the upstream-bound signal 612 is measured. Mirrors or reflectors 614, 616 reflect the downstream-bound signal 608 and the upstream-bound signal 612 into, and out of, the flow of fluid 602 in the pipe 604. Using the two times-of-flight, and a distance between the upstream ultrasonic transducer 606 and the downstream ultrasonic transducer 610, a calculation can determine the flowrate based on the ultrasonic fluid meter. The flowrate may then be adjusted by the flowrate adjustment factor of FIG. 5.

The upstream time-of-flight and the downstream time-of-flight may be used to determine the speed of sound in the fluid 602. The speed of sound in the fluid mixture is determined at block 206, and used in the mapping operation of FIG. 3.

### Example Methods

In some examples, the techniques discussed herein may be implemented by one more processors accessing software defined on one or more memory devices. The processor(s) and memory device(s) may be located on a smart utility meter and/or a cloud-based server (e.g., a server of a utility company). If the functionality is distributed, portions of the software may reside on each of the smart utility meter and the server.

In other examples of the techniques discussed herein, the methods of operation may be performed by one or more application specific integrated circuits (ASIC) or may be performed by a general-purpose processor utilizing software defined in computer readable media.

In the examples and techniques discussed herein, the memory device(s) 126 may comprise computer-readable media and may take the form of volatile memory, such as random-access memory (RAM) and/or non-volatile memory, such as read only memory (ROM) or flash RAM. Computer-readable media devices include volatile and non-volatile, removable, and non-removable media implemented in any method or technology for storage of information such as computer-readable instructions, data structures, program modules, or other data for execution by one or more processors of a computing device. Examples of computer-readable media include, but are not limited to, phase-change memory (PRAM), static random-access memory (SRAM), dynamic random-access memory (DRAM), other types of random access memory (RAM), read-only memory (ROM), electrically erasable programmable read-only memory (EEPROM), programmable read-only memory (PROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transitory medium that can be used to store information for access by a computing device.

As defined herein, computer-readable media includes non-transitory media. Computer-readable media does not include transitory media, such as modulated data signals and carrier waves, and/or other information-containing signals.

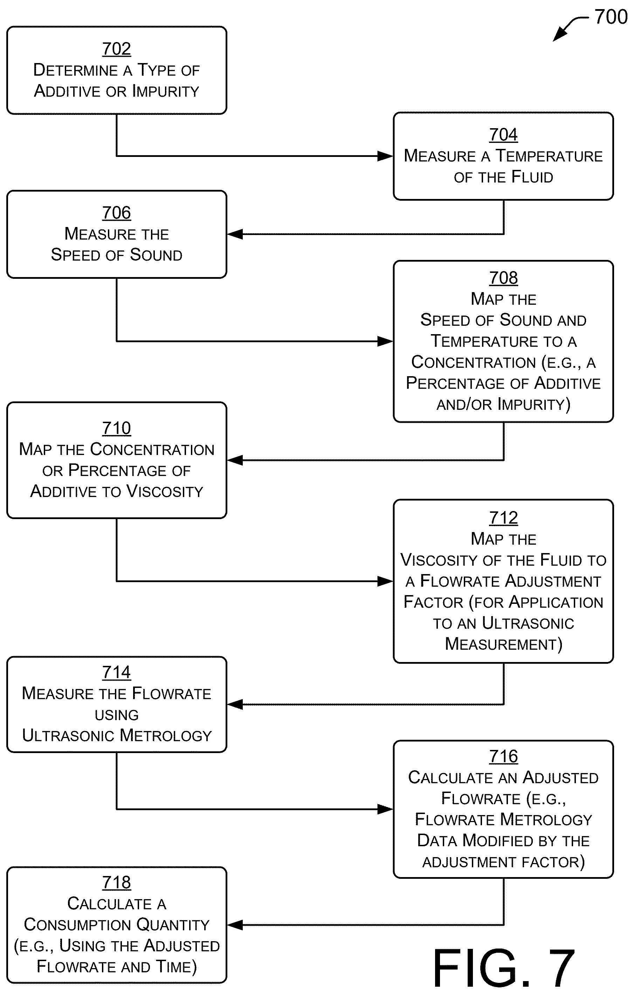

FIG. 7 shows an example method 700 by which an example method by which a system measures flowrates of a fluid containing an additive or an impurity. At block 702, a type of the additive or impurity is determined. In an example, the type of additive (e.g., glycol) or impurity (e.g., salt) is entered into the system, such as by an operator, a default, a design characteristic, etc. In a further example, the system for mixture detection and metrology compensation could be specifically designed for a particular additive or impurity. At block 704, the temperature of the fluid (e.g., a mixture of water or other fluid and an additive or an impurity) is measured. At block 706, the speed of sound is measured. In an example, the speed of sound may be obtained by operation of an ultrasonic metrology metering device. In the example, the speed of sound in the fluid is measured and calculated by averaging the two time of flights, upstream and downstream. The distance between the two transducers is then divided by the measured average time. In the example of FIG. 6, distance between the upstream ultrasonic transducer 606 and the downstream ultrasonic transducer 610 (e.g., by considering the travel distance based on the mirrors or reflectors 614, 616).

At block 708, the speed of sound and temperature information is mapped to a concentration (e.g., a percentage of additive and/or impurity). In the example of FIG. 3, the mapping is based on a function or lookup table 304 selected based on the temperature measured at block 704. In an example, the concentration (e.g., as a percentage, parts per million, etc.) may be displayed on a user interface (e.g., user interface 142 of FIG. 1). The user interface may be updated to show the concentration of the impurity or additive if and/or when it changes. In an example, if the fluid is water having an impurity of salt (e.g., a desalination process has not fully removed the salt) then the concentration of salt in the water could be displayed by the user interface. At block 710, the concentration or percentage of additive is then mapped to a viscosity of the fluid (i.e., the fluid mixture). The mapping (e.g., a function or lookup table) is based on the temperature measured at block 704. In the example of FIG. 4, the lookup table 404 associated with the measured temperature is selected. At block 712, the viscosity of the fluid mixture is mapped to a flowrate adjustment factor (to be applied to an ultrasonic flowrate measurement). At block 714, a flowrate measurement is made. In an example, the flowrate measurement is made by ultrasonic metrology device(s). At block 716, the flowrate measurement is modified, such as by operation of the flowrate adjustment factor. The modified (or adjusted) flowrate is more accurate than the flowrate measured at block 714. At block 718, a consumption quantity is calculated, typically based on the adjusted flowrate and time.

### Example Systems, Devices, and Methods

The following examples of a meter with mixture detection and metrology compensation are expressed as numbered clauses. While the examples illustrate a number of possible configurations and techniques, they are not meant to be an exhaustive or limiting listing of the systems, methods, and/or techniques described herein.
1. A method of operating a metering device, comprising: measuring a speed of sound within a flow of a fluid within the metering device; determining a concentration of an impurity or an additive within the flow of the fluid, based at least in part on the speed of sound, wherein determining the concentration of the impurity is based on factors comprising: an identity of the fluid; an identity of the additive or impurity; and a temperature of the fluid; determining a viscosity of the fluid, based at least in part on the concentration; and determining a flowrate of the fluid based at least in part on the viscosity of the fluid and an upstream time-of-flight and a downstream time-of-flight.
2. The method of clause 1, wherein determining the flowrate comprises: determining a flowrate adjustment factor based at least in part on the viscosity of the fluid; and adjusting the flowrate of the fluid based at least in part on the flowrate adjustment factor.
3. The method of clause 1, wherein: the additive is glycol; and the fluid is water.
4. The method of clause 1 or 2, wherein: the impurity is salt; and the fluid is water.
5. The method of any preceding clause, wherein: determining the concentration is based at least in part on a first formula or a first lookup table; determining the viscosity is based at least in part on a second formula or a second lookup table; and determining the flowrate is based at least in part on a third formula or a third lookup table.
6. The method of any preceding clause, wherein measuring the speed of sound comprises: measuring a first time-of-flight of an upstream-bound signal; measuring a second time-of-flight of a downstream-bound signal; and calculating the speed of sound based on the first time-of-flight and the second time-of-flight.
7. The method of any preceding clause, additionally comprising: updating a user interface to show the concentration of the additive or impurity.
   The method as recited above, additionally comprising one or more of, or any combination of, or all of, the preceding clauses.
8. A metering device, comprising: a first transducer and a second transducer disposed in a pipe of the metering device, wherein the second transducer is downstream of the first transducer; a temperature sensor; a processor; one or more memory device(s) in communication with the processor; and statements, defined in the one or more memory devices, which when executed by the processor configure the metering device to perform actions comprising: measuring a speed of sound within a flow of a fluid in the pipe to be measured; determining a concentration of an additive or an impurity within the flow of the fluid, based at least in part on the speed of sound and input from the temperature sensor; determining a viscosity of the fluid, based at least in part on the concentration; and determining a flowrate of the fluid based at least in part on the viscosity and output of the first transducer and the second transducer.
9. The metering device as recited in clause 8, wherein determining the concentration of the impurity is based on inputs comprising: an identity of the additive or impurity; and an identity of the fluid.
10. The metering device as recited in clause 8 or 9, wherein determining the flowrate comprises: determining a flowrate adjustment factor based at least in part on the viscosity of the fluid; and adjusting the flowrate of the fluid based at least in part on the flowrate adjustment factor.
11. The metering device as recited in any of clauses 8 to 10, wherein: determining the concentration is based at least in part on a first formula or a first lookup table; determining the viscosity is based at least in part on a second formula or a second lookup table; and determining the flowrate is based at least in part on a third formula or a third lookup table.
12. The metering device as recited in any of clauses 8 to 11, wherein: the impurity is salt; and the fluid is water.
13. The metering device as recited in any of clauses 8 to 12, wherein: the additive is glycol; and the fluid is water.
14. The metering device as recited in any of clauses 8 to 13, wherein the actions additionally comprise: updating a user interface to show the concentration of the impurity, wherein the impurity is salt.
   The metering device as recited above, additionally comprising one or more of, or any combination of, or all of, the preceding clauses.
15. One or more non-transitory computer-readable media storing computer-executable instructions that, when executed by one or more processors, configure a computing device to perform actions comprising: measuring a speed of sound within a flow of a fluid within the metering device; determining a concentration of an impurity or an additive within the flow of the fluid, based at least in part on the speed of sound, wherein determining the concentration of the impurity is based on factors comprising: an identity of the fluid; an identity of the additive or impurity; and a temperature of the fluid; determining a viscosity of the fluid, based at least in part on the concentration; and determining a flowrate of the fluid based at least in part on the viscosity of the fluid and an upstream time-of-flight and a downstream time-of-flight.
16. One or more computer-readable media as recited in clause 15, wherein determining the flowrate comprises: determining a flowrate adjustment factor based at least in part on the viscosity of the fluid; and adjusting the flowrate of the fluid based at least in part on the flowrate adjustment factor.
17. One or more computer-readable media as recited in clause 15 or 15, wherein: the additive is glycol; and the fluid is water.
18. One or more computer-readable media as recited in any of clauses 15 to 17, wherein: the impurity is salt; and the fluid is water.
19. One or more computer-readable media as recited in any of clauses 15 to 18, wherein: determining the concentration is based at least in part on a first formula or a first lookup table; determining the viscosity is based at least in part on a second formula or a second lookup table; and determining the flowrate is based at least in part on a third formula or a third lookup table.
20. One or more computer-readable media as recited in any of clauses 15 to 19, wherein measuring the speed of sound comprises: measuring a first time-of-flight of an upstream-bound signal; measuring a second time-of-flight of a downstream-bound signal; and calculating the speed of sound based on the first time-of-flight and the second time-of-flight.
21. One or more computer-readable media as recited in any of clauses 15 to 20, additionally comprising: updating a user interface to show the concentration of the additive or impurity.

The one or more computer-readable media as recited above, additionally comprising one or more of, or any combination of, or all of, the preceding clauses.

### Conclusion

Although the subject matter has been described in language specific to structural features and/or methodological actions, it is to be understood that the subject matter defined in the appended claims is not necessarily limited to the specific features or actions described. Rather, the specific features and actions are disclosed as exemplary forms of implementing the claims.

The words comprise, comprises, and/or comprising, when used in this specification and/or claims do not preclude the presence or addition of one or more other features, devices, techniques, and/or components and/or groups thereof.

## Claims

1. A method of operating a metering device, comprising:
measuring a speed of sound within a flow of a fluid within the metering device;
determining a concentration of an impurity or an additive within the flow of the fluid, based at least in part on the speed of sound, wherein determining the concentration of the impurity is based on factors comprising:
an identity of the fluid;
an identity of the additive or impurity; and
a temperature of the fluid;
determining a viscosity of the fluid, based at least in part on the concentration; and
determining a flowrate of the fluid based at least in part on the viscosity of the fluid and an upstream time-of-flight and a downstream time-of-flight.

2. The method of claim 1, wherein determining the flowrate comprises:
determining a flowrate adjustment factor based at least in part on the viscosity of the fluid; and
adjusting the flowrate of the fluid based at least in part on the flowrate adjustment factor.

3. The method of claim 1 or 2, wherein:
the additive is glycol; and
the fluid is water.

4. The method of any preceding claim, wherein:
the impurity is salt; and
the fluid is water.

5. The method of any preceding claim, wherein:
determining the concentration is based at least in part on a first formula or a first lookup table;
determining the viscosity is based at least in part on a second formula or a second lookup table; and
determining the flowrate is based at least in part on a third formula or a third lookup table.

6. The method of any preceding claim, wherein measuring the speed of sound comprises:
measuring a first time-of-flight of an upstream-bound signal;
measuring a second time-of-flight of a downstream-bound signal; and
calculating the speed of sound based on the first time-of-flight and the second time-of-flight.

7. The method of any preceding claim, additionally comprising:
updating a user interface to show the concentration of the additive or impurity.

8. A metering device, comprising:
a first transducer and a second transducer disposed in a pipe of the metering device, wherein the second transducer is downstream of the first transducer;
a temperature sensor;
a processor;
one or more memory device(s) in communication with the processor; and
statements, defined in the one or more memory devices, which when executed by the processor configure the metering device to perform actions comprising:
measuring a speed of sound within a flow of a fluid in the pipe to be measured;
determining a concentration of an additive or an impurity within the flow of the fluid, based at least in part on the speed of sound and input from the temperature sensor;
determining a viscosity of the fluid, based at least in part on the concentration; and
determining a flowrate of the fluid based at least in part on the viscosity and output of the first transducer and the second transducer.

9. The metering device as recited in claim 8, wherein determining the concentration of the impurity is based on inputs comprising:
an identity of the additive or impurity; and
an identity of the fluid.

10. The metering device as recited in claim 8 or 9, wherein determining the flowrate comprises:
determining a flowrate adjustment factor based at least in part on the viscosity of the fluid; and
adjusting the flowrate of the fluid based at least in part on the flowrate adjustment factor.

11. The metering device as recited in any of claims 8 to 10, wherein:
determining the concentration is based at least in part on a first formula or a first lookup table;
determining the viscosity is based at least in part on a second formula or a second lookup table; and
determining the flowrate is based at least in part on a third formula or a third lookup table.

12. The metering device as recited in any of claims 8 to 11, wherein:
the impurity is salt; and
the fluid is water.

13. The metering device as recited in any of claims 8 to 12, wherein:
the additive is glycol; and
the fluid is water.

14. The metering device as recited in any of claims 8 to 13, wherein the actions additionally comprise:
updating a user interface to show the concentration of the impurity,
wherein the impurity is salt.

15. One or more non-transitory computer-readable media storing computer-executable instructions that, when executed by one or more processors, configure a computing device to perform the method of any of claims 1 to 7.
